# EUROPÄISCHE PATENTSCHRIFT

(11) **EP 0 907 430 B1**
(45) Veröffentlichungstag und Bekanntmachung des Hinweises auf die Patenterteilung: **25.07.2001**
(21) Anmeldenummer: 97923069.5
(22) Anmeldetag: 13.05.1997
(51) Int. Cl.: B21C 47/30

(54) **DIREKT ANGETRIEBENER HASPEL**
DIRECT-DRIVE COILER
ENROULEUR A ENTRAINEMENT DIRECT

(30) Priorität: 24.05.1996 DE 19621171
(43) Veröffentlichungstag der Anmeldung: 14.04.1999
(73) Patentinhaber: SMS Demag AG, 40237 Düsseldorf (DE)
(72) Erfinder: SETZER, Helmut, D-57078 Siegen (DE); PATZELT, Ulrich, D-57264 Hilchenbach (DE); GERNAND, Georg, D-57223 Kreuztal (DE)
(74) Vertreter: Valentin, Ekkehard, Dipl.-Ing.
(86) Internationale Anmeldenummer: EP9702448
(87) Internationale Veröffentlichungsnummer: WO9745214

(56) Entgegenhaltungen:
- FR-A- 2 190 111
- GB-A- 903 863
- US-A- 2 556 149
- US-A- 5 080 401
- PATENT ABSTRACTS OF JAPAN vol. 007, no. 215 (M-244), 22.September 1983 & JP 58 110126 A (HITACHI SEISAKUSHO KK), 30.Juni 1983,

## Beschreibung

Die Erfindung betrifft einen direkt angetriebenen Haspel zum Wickeln von Walzband zu Coils nach dem Oberbegriff des Anspruchs 1 (Siehe z.B. JP-A-58 110 126).

Derartige direkt angetriebene Haspel sind z.B. durch die DE-PS 17 52 185 oder die DE-OS 39 39 119 bekanntgeworden. Hier werden die relative axiale Verschiebung zwischen der Haspelwelle und dem mit den Segmenten verbundenen Stempel über mechanische Stellantriebe bewerkstelligt. Dabei handelt es sich um Kniehebelantriebe bzw. um Federpakete und Distanzelemente, die alle nur bei Stillstand des Haspels betätigt werden können. Ein eventuelles Nachspannen während des Haspelvorgangs ist mit diesen Stellantrieben nicht möglich.

Es sind durch die DE-OS 35 02 452 auch Kolben-Zylinder-Einheiten bekanntgeworden, mittels derer als Stellantrieb dienende mit den oben geschilderten Nachteilen behaftete Federpakete ge-bzw. entspannt werden können.

Auch die EP-PS 0 004 854 offenbart eine Kolben-Zylinder-Einheit, die direkt als Stellantrieb zum Spreizen bzw. Entspreizen des Haspels dient. Bei diesen beiden mit Kolben-Zylinder-Einheiten versehenen Haspeln handelt es sich jedoch nicht um gattungsgemäße direkt angetriebene Haspel, sondern um indirekt angetriebene Haspel, bei denen der Antriebsmotor neben der Haspelwelle angeordnet ist.

Der Haspel nach der EP-OS 0 004 854 besitzt zwar zentrale Drehzuführungen, so daß z.B. ein Nachspannen während des Haspelvorgangs möglich ist, würde jedoch der Antriebsmotor für den Haspel direkt an die Haspelwelle angeflanscht, so ergäben sich Schwierigkeiten mit der Druckmittelzuführung, da in der Regel nur volle Motorwellen Anwendung finden, so daß das Druckmittel nicht vom Ende der Welle, wo es eingespeist wird, zur Kolben-Zylinder-Einheit geführt werden könnte. Sollte die Druckmittelzuführung jedoch durch die Motorwelle gelegt werden, so können durch die Magnetwirkung im Motor Metallpartikel im Druckmittel magnetisiert werden und eventuell zu Verstopfungen der Zuleitungen führen. Außerdem müßten aufwendige flexible Druckmittelverbindungen vorgesehen werden, um etwaige seitliche Versätze bzw. axiale Verschiebungen zwischen Antriebseinheit und Haspelwelle überbrücken zu können.

Durch die DE-PS 38 06 931 sind zwar Drehzuführungen bekanntgeworden, über die Druckmittel radial in eine Welle eingeführt werden kann, diese Drehzuführungen weisen für einen optimalen Betrieb sehr enge Fertigungstoleranzen auf, die einen Einsatz bei widrigen Verhältnissen, wie sie in Walzwerken herrschen, ausschließen. Zudem lassen sie sich diese Drehzuführungen nur bis Baugrößen von maximal 80 mm Durchmesser am Ringspalt einsetzen. Auch aus diesem Grunde konnte ein Einsatz in Walzwerksbetrieben z.B. bei Walzwerkshaspeln, wo erheblich größere Durchmesser verwendet werden, nicht erfolgen.

Der Erfindung liegt daher die Aufgabe zugrunde, einen gattungsgemäßen direkt angetriebenen Haspel so weiterzubilden, daß er auch während des Haspelbetriebs spreiz- bzw. entspreizbewegbar ist.

Zur Lösung dieser Aufgabe werden erfindungsgemäß die Merkmale des Anspruchs 1 vorgeschlagen. Über die Drehzuführung ist eine Verbindung zwischen der Kolben-Zylinder-Einheit und einer Druckmittelquelle geschaffen, über welche die Kolben-Zylinder-Einheit ständig auch dann mit Druckmittel versorgt werden kann, wenn der Haspel zum Zwecke des Auf- bzw. Abwickelns von Band drehangetrieben ist.

Die Drehzuführung soll so angeordnet sein, daß keine der Druckmittelleitungen durch die Welle des an die Haspelwelle bzw. den Wellenansatz angeflanschten Motor verläuft. Es ist daher vorgesehen, die Drehzuführung auf den Wellenansatz anzuordnen. Es besteht aber auch die Möglichkeit, die Drehzuführung auf der Haspelwelle selbst vorzusehen.

Durch den Einsatz eines doppelt wirkenden Stufenkolbens lassen sich die notwendigen Spreiz- und Entspreizkräfte bei entsprechendem Druck des Druckmediums vorgeben.

Dadurch, daß die Drehzuführung ein feststehendes Gehäuse aufweist, lassen sich die äußeren Verbindungen mit der Drehzuführung fest anordnen. Aufwendige und anfällige flexible Schläuche sind hier nicht notwendig. Die in dem Gehäuse angeordneten Buchsen lassen sich erheblich leichter herstellen, als wenn das Gehäuse entsprechende Buchsenform aufweisen würde. Hinzu kommt, daß durch das getrennte Vorsehen eines Gehäuses, von Buchsen und der Hülse sich unterschiedliche Materialpaarungen verwirklichen lassen, die einen möglichst geringen Verschleiß gewährleisten und die in ihrer Wärmedehnung aufeinander abgestimmt sind, so daß die Spalte zwischen den Buchsen und der Hülse auch bei den widrigen Bedingungen in Walzwerken optimal dimensioniert sind.

Die mit den Zuführkanälen ausgestattete Hülse ist fertigungstechnisch leicht herzustellen. Ihr Einsatz erlaubt die Verwendung von massiven, nicht angebohrten Wellenansätzen, wodurch eine hohe Stabilität der Wellenansätze gewährleistet ist.

Das zwischen der Hülse und den Buchsen austretende Druckmittel, durch welches sich die Buchse über einen Ölfilm auf der Hülse abstützt, wird über Leckölleitungen zu einem Tank abgeführt. Auch der Kolben-Zylinder-Einheit sind Leckölleitungen zugeordnet, welche in dem Öltank enden. Die Leckölleitungen der Kolben-Zylinder-Einheit führt lediglich Öl, wenn Dichtungen der Kolben-Zylinder-Einheit defekt sind. In diesem Fall können Leckölmelder vorgesehen werden, die den Defekt der Dichtungen anzeigen.

Um den Ölfilm zwischen der Hülse und den Buchsen während des Haspelbetriebes nicht abreißen zu lassen, muß auf den Druckmittelleitungen stets eine vorgegebene Öl-Druckschwelle aufrechterhalten werden. Dabei steht die Druckmitteleitung "Spreizen" unter ausreichendem Druck, so daß ein stabiler Ölfilm gewährleistet ist. Die Druckmittelleitung "Entspreizen" könnte theoretisch während des Haspelbetriebes drucklos sein, wodurch es jedoch zu Beschädigungen der Drehzuführung kommen würde, wenn nicht die Öl-Druckschwelle auch auf der Druckmittelleitung "Entspreizen" aufrechterhalten bliebe.

Es besteht aber auch die Möglichkeit, zusätzliche Ringkanäle und radiale Bohrungen in den Buchsen vorzusehen, um über diese statisch einen Ölfilm zwischen der Hülse und der entsprechenden Buchse aufrechtzuerhalten. In diesem Fall kann die Druckmittelleitungen "Entspreizen" auch während des Betriebes drucklos bleiben. Der Ölfilm dient dabei dazu, daß große Gewicht der Buchsen und evtl. Beschleunigungskräfte, die an den Walzwerkshaspeln in Folge von Schwingungen auftreten, aufzunehmen. Ein wesentlicher Vorteil des statischen Ölfilms ergibt sich dabei durch die elastische Aufweitung des Dichtspaltes. Hierdurch werden Formfehler, z. B. Abweichungen von der Kreisform ausgeglichen, die in Folge der mechanischen Bearbeitung und einer Änderung des Eigenspannungszustandes unter Druck und Temperatur entstehen können.

Die mit Anspruch 10 vorgeschlagenen Keramikbeschichtungen gewährleisten eine längere Lebensdauer der Hülse und der Buchsen. Die nachgiebige Halterung der Buchsen im Gehäuse, z.B. über O-Ringe, ist von Vorteil, um die Symmetrieabweichungen auszugleichen, welche bei der Fertigung der einzelnen Bauteile entstehen können. Die Buchsen zentrieren sich durch den Ölfilm auf der Hülse und erhalten über die O-Ringe die Möglichkeit, sich der Lage der Hülse anzupassen.

Die Erfindung wird anhand einer Zeichnung näher erläutert. Dabei zeigen
- Figur 1: einen erfindungsgemäßen Haspel,
- Figur 2: eine geschnittene Teildarstellung entsprechend Fig. 1,
- Figur 3: eine erfindungsgemäße Kolben-Zylinder-Einheit,
- Figur 4: eine erfindungsgemäße Drehzuführung.

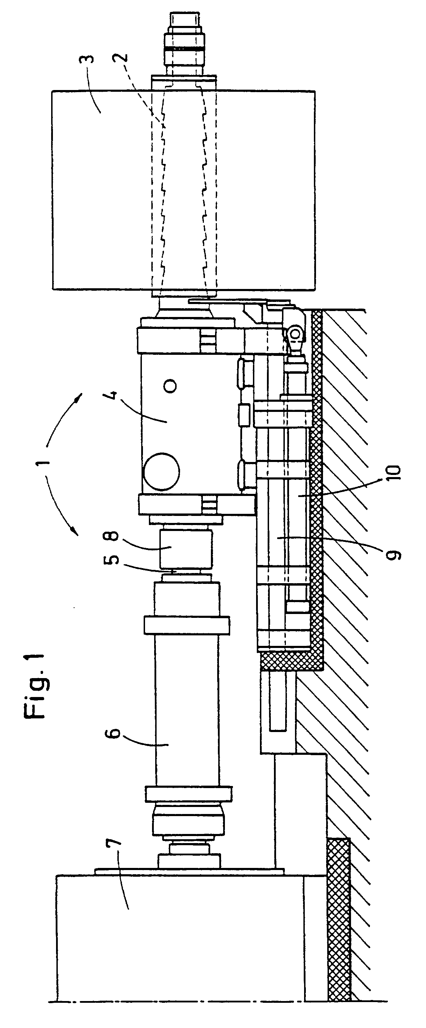

Fig. 1 zeigt einen Haspel 1, der aus einer Trommel 2, auf der ein Coil 3 aufgewickelt ist, aus einer Haspelwelle 4, einem Wellenansatz 5, einer Wellenkupplung 6 und einem Motor 7 besteht. Auf dem Wellenansatz 5 ist eine Drehzuführung 8 angeordnet. Dem Haspel 1 ist ein auf einer Führung 9 angeordneter Abschieber 10 zugeordnet, der dazu dient, die Coils 3 von der Trommel 2 abzuschieben.

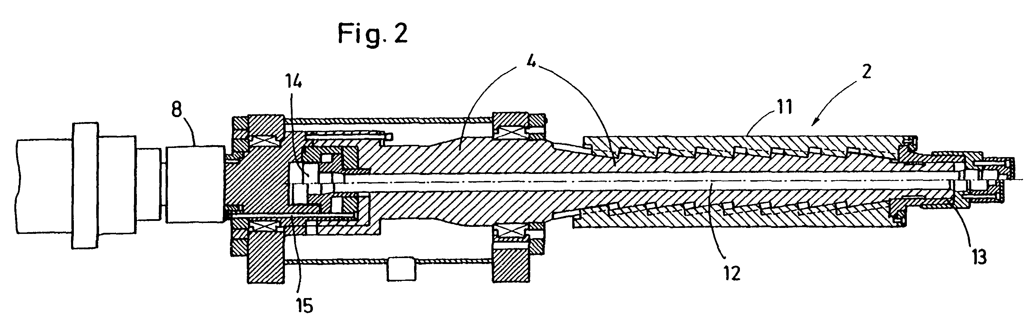

Fig. 2 zeigt die Trommel 2 teilweise in gespreizter und teilweise in entspreizter Stellung. Die Trommelsegmente 11 sind dabei über einen Stempel 12 und einen Anschlußflansch 13 auf der Haspelwelle 4 verschiebbar. Der Stempel 12 ist über eine Kolben-Zylinder-Einheit 14 antreibbar, die über Druckmittelleitungen 15, 15' mit der Drehzuführung 8 verbunden sind.

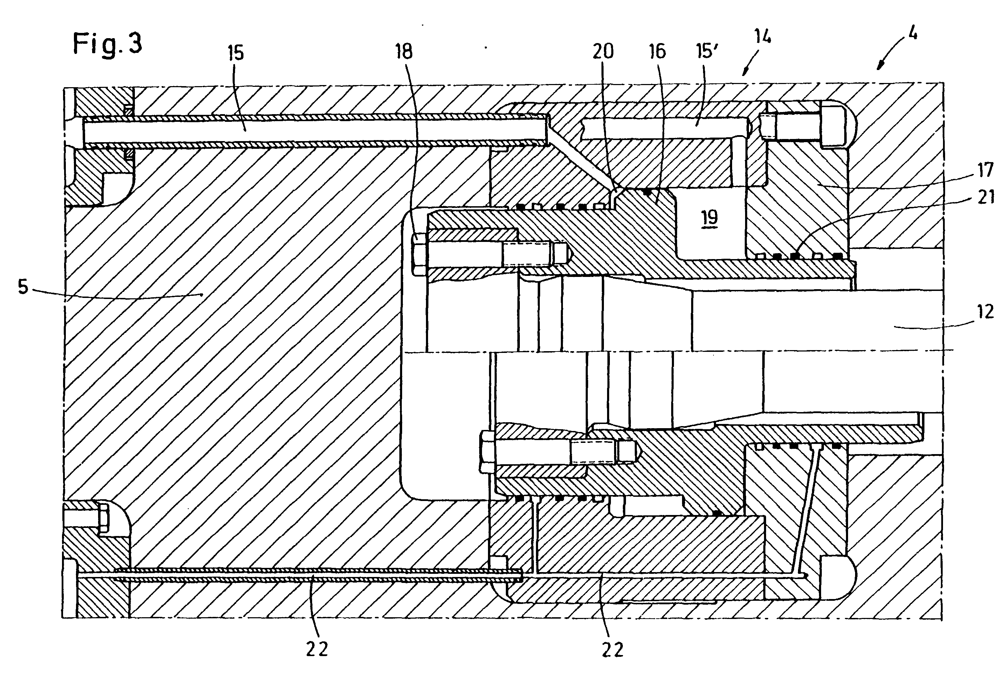

Fig. 3 zeigt den Kolben 16 und den in der Haspelwelle 4 integrierten Zylinder 17 der Kolben-Zylinder-Einheit 14. Über den Wellenansatz 5 ist der Zylinder 17 axial gehalten. Der Kolben 16 ist über Schrauben 18 mit dem Stempel 12 verbunden. Die in Fig. 3 hintereinander angeordnet dargestellten Druckmittelleitungen 15, 15' enden in den Zylinderräumen 19, 20. Der Kolben 16 ist über Dichtringe 21 im Zylinder 17 abgedichtet. Leckölleitungen 22 dienen dazu, eventuell auftretende Leckölmengen aufzufangen und zu einem nicht gezeigten Öltank abzuführen. Führen die Leckölleitungen 22 Öl, so ist das ein Zeichen dafür, daß die Dichtringe 21 beschädigt sind.

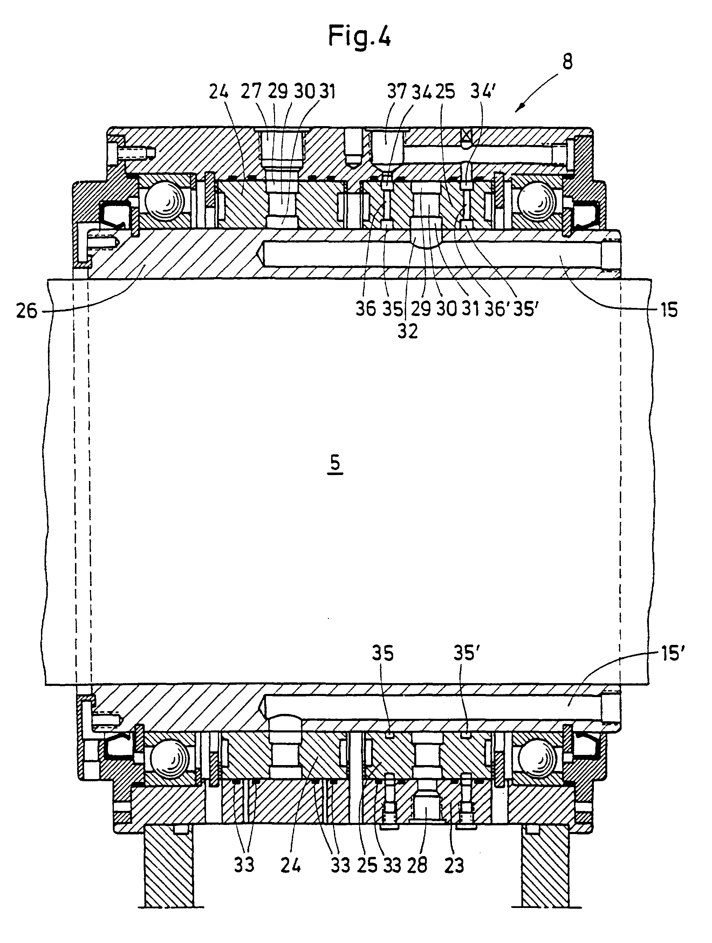

Fig. 4 zeigt den Wellenansatz 5, auf dem die Drehzuführung 8 angeordnet ist. Die Drehzuführung 8 besteht aus einem Gehäuse 23, in dem Buchsen 24, 25 gelagert sind. Die Buchsen 24, 25 sind auf einer Hülse 26 gelagert, welche den Wellenansatz 5 umgibt.

Am Gehäuse 23 ist ein Anschluß 27 für das Druckmittel für den Spreizvorgang der Trommel 2 sowie ein Anschluß 28 für das Druckmittel zum Entspreizen der Trommel 2 vorgesehen. Die Buchsen 24, 25 weisen im sie übergreifenden Bereich der Anschlüsse 27, 28 Ringkanäle 29 auf, über die Ableitungsbohrungen 30 mit Ringkanälen 31 verbunden sind. Die Ringkanäle 31 stehen Ableitungsbohrungen 32 in der Hülse 26 gegenüber. Die Ableitungsbohrungen 32 enden in den Druckmittelleitungen 15, 15'.

Die Buchsen 24 und 25 sind im Gehäuse 23 über O-Ringe 33 gelagert. Zwischen den Buchsen 24 und der Hülse 26 bildet sich während des Betriebs ein Ölfilm, auf dem die Buchse 24 schwimmt. Das zwischen der Buchse 24 und der Hülse 26 austretende Öl wird über eine Leckölleitung aufgefangen und dem nicht gezeigten Öltank zugeführt.

Der Ringkanal 31 der Buchse 25, die dem Anschluß 28 für das Entspreizen gegenübersteht, kann während des normalen Haspelbetriebs drucklos sein. Würde für diese Buchse 25 eine der Buchse 24 entsprechende Buchse verwendet, so müßte während des Haspelbetriebs auch auf der Entspreizleitung ein gewisser Druck herrschen, damit die Schmierung zwischen der Buchse und der Hülse 26 gewährleistet ist.

Die in Fig. 4 gezeigte Buchse 25 weist jedoch weitere Ringkanäle 34, 35; 34', 35' und radiale Bohrungen 36; 36' auf, über die ständig ein Druckmittel zur Aufrechterhaltung des Gleitfilms in den Spalt zwischen der Buchse 25 und der Hülse 26 geführt wird. Der Anschluß 37 dient dazu, das Schmiermittel zur Buchse 25 zu leiten, um so die hydrostatische Lagerung der Buchse 25 auf der Hülse 26 zu gewährleisten, ohne daß am Anschluß 28 Medium unter Druck anstehen muß. Eine entsprechende Hydrostatik läßt sich selbstverständlich auch für die Buchse 24 oder weitere, nicht gezeigte Buchsen vorsehen.

### Bezugszeichenübersicht

- 1: Haspel
- 2: Trommel
- 3: Coil
- 4: Haspelwelle
- 5: Wellenansatz
- 6: Wellenkupplung
- 7: Motor
- 8: Drehzuführung
- 9: Führung
- 10: Abschieber
- 11: Trommelsegmente
- 12: Stempel
- 13: Anschlußflansch
- 14: Kolben-Zylinder-Einheit
- 15: Druckmittelleitung
- 16: Kolben
- 17: Zylinder
- 18: Schraube
- 19: Zylinderraum
- 20: Zylinderraum
- 21: Dichtring
- 22: Leckölleitung
- 23: Gehäuse
- 24: Buchse
- 25: Buchse
- 26: Hülse
- 27: Anschluß
- 28: Anschluß
- 29: Ringkanal
- 30: radiale Bohrung
- 31: Ringkanal
- 32: Ableitungsbohrung
- 33: O-Ring
- 34: Ringkanal
- 35: Ringkanal
- 36: radiale Bohrung
- 37: Anschluß

## Patentansprüche

1. Direkt angetriebener Haspel (1) zum Auf- und/oder Abwickeln von Walzband mit einer Trommel (2), die aus mehreren spreizbewegbaren Elementen besteht, welche sich mit keilförmig ausgebildeten Gleitflächen gegen eine in einem Haspelgehäuse drehbar gelagerte Haspelwelle (4) abstützen, mit einem in der Haspelwelle (4) geführten Stempel (12), welcher mittels eines Anschlußflansches (13) mit den Trommelsegmenten (11) verbunden ist, wobei in die Haspelwelle (4) ein sich axial erstreckender Zylinder (17) eingearbeitet ist, der einen Kolben (16) aufweist, welcher mit dem Stempel (12) verbunden ist und eine relative axiale Verschiebung zwischen der Haspelwelle (4) und dem mit den Segmenten (11) verbundenen Stempel (12) bewirken kann, durch die eine Spreizbewegung der Segmente (11) hervorgerufen wird, daß die Haspelwelle (4) über den Zylinder (17) hinaus durch einen diesen abschließenden, angeflanschten Wellenansatz (5) in Richtung auf den axial angeordneten, direkt treibenden Motor (7) fortgesetzt ist, und daß eine Drehzuführung (8) vorgesehen ist, über die Druckmedium an die in der Haspelwelle (4) vorgesehene Kolbenzylindereinheit (14) zuführbar ist,
**dadurch gekennzeichnet**,
daß die Drehzuführung (8) ein die fliegend gelagerte Haspelwelle (4) und/oder den Wellenansatz (5) umfassendes Gehäuse (23) aufweist, in dem mindestens je ein Anschluß (27, 28) als Zu- und Ableitung vorgesehen ist und in dem für jede Zu- bzw. Ableitung eine Buchse (24, 25) gehaltert ist, deren Innen- und Außenmantel jeweils mit Ringkanälen (29, 31) ausgestattet ist, die durch mindestens eine im wesentlichen radial geführte Bohrung (30) miteinander verbunden sind, wobei die äußeren Ringkanäle (29) die Zu-bzw. Ableitungs-Anschlüsse (27, 28) des Gehäuses (23) untergreifen und die inneren Ringkanäle (31) von der Haspelwelle (4) und/oder dem Wellenansatz (5) zugeordneten Ableitungsbohrungen (32) untergriffen sind.

2. Direkt angetriebener Haspel nach Anspruch 1,
**dadurch gekennzeichnet**,
daß die Ableitungsbohrungen (32) in einer die Haspelwelle (4) und/oder den Wellenansatz (5) umgreifenden Hülse (26) vorgesehen sind, welche Druckmittelleitungen (15, 15') zu der Kolben-Zylinder-Einheit (14) aufweist.

3. Direkt angetriebener Haspel nach einem Anspruch 1 oder 2,
**dadurch gekennzeichnet,**
daß die Kolben-Zylinder-Einheit (14) und die Drehzuführungen (8) Sammelräume für Lecköl aufweisen, das über Leckölleitungen (22) einem Öltank zuführbar ist.

4. Direkt angetriebener Haspel nach einem der Ansprüche 1 bis 3,
**dadurch gekennzeichnet,**
daß während des Haspelbetrieb mindestens eine vorgegebene Druckschwelle auf den Druckmittelleitungen (15, 15') aufrechterhalten wird.

5. Direkt angetriebener Haspel nach einem der Ansprüche 1 oder 2,
**dadurch gekennzeichnet,**
daß mindestens die Buchse (25) zusätzliche Ringkanäle (34, 35; 34', 35') und diese verbindende radiale Bohrungen (36; 36') aufweist, die von einem die Schmierung zwischen Hülse (26) und der Buchse (25) bewirkenden Druckmittel beaufschlagbar sind.

6. Direkt angetriebener Haspel nach einem der Ansprüche 1 bis 5,
**dadurch gekennzeichnet,**
daß der Außenmantel der Hülse (26) und/oder die Innenmäntel der Buchsen (24, 25) mit Keramik beschichtet sind.

7. Direkt angetriebener Haspel nach einem der Ansprüche 1 bis 6,
**dadurch gekennzeichnet,**
daß die Buchsen (24, 25) im Gehäuse (23) nachgiebig gehalten sind.

## Claims

1. Directly driven reel device (1) for reeling up and/or unreeling strip to be rolled, comprising a drum (2) consisting of several elements, which can be spread apart and which are supported by slide surfaces of wedge shape against a reel shaft (4) rotatably mounted in a reel housing, and a ram (12) which is guided in the reel shaft (4) and which is connected by means of a connecting flange (13) with the drum segments (11), wherein machined into the reel shaft (4) is an axially extending cylinder (17) having a piston (16), which is connected with the ram (12) and can effect a relative axial displacement between the reel shaft (4) and the ram (12) connected with the segments (11), by which a spreading movement of the segments (11) is produced, wherein the reel shaft (4) is prolonged beyond the cylinder (17) by a shaft extension (5), which adjoins this and is flanged-mounted, in direction towards the axially arranged, direct-driving motor (7) and wherein a rotary feed (8), by way of which the pressure medium can be fed to the piston-cylinder unit (14) provided in the reel shaft (4), is provided, characterised in that the rotary feed (8) comprises a housing (23), which surrounds the reel shaft (4) mounted in cantilever manner and/or the shaft extension (5) and in which at least one respective connection (27, 28) as feed duct and drain duct is provided and a respective bush (24, 25) for each feed duct and drain duct is retained, the inner circumference and outer circumference of the bushes each being furnished with a respective one of annular channels (29, 31) which are connected together by at least one substantially radially directed bore (30), wherein the outer annular channels (29) engage under the feed duct or drain duct connections (27, 28) of the housing (23) and the inner annular channels (31) are engaged under by the reel shaft (4) and/or drain duct bores (32) associated with the shaft extension (5).

2. Directly driven reel device according to claim 1, characterised in that the drain duct bores (32) are provided in a sleeve (26) which engages around the reel shaft (4) and/or the shaft extension (5) and which has pressure medium ducts (15, 15') leading to the piston-cylinder unit (14).

3. Directly driven reel device according to claim 1 or 2, characterised in that the piston-cylinder unit (14) and the rotary feeds (8) have collecting spaces for leakage oil, which can be fed to an oil tank by way of leakage oil ducts (22).

4. Directly driven reel device according to one of claims 1 to 3, characterised in that at least one predetermined pressure threshold is maintained at the pressure medium ducts (15,1 5') during the reel device operation.

5. Directly driven reel device according to claim 1 or 2, characterised in that at least the bush (25) has additional annular channels (34, 35; 34', 35') and radial bores (26; 36') connecting these, which can be acted on by a pressure medium producing the lubrication between sleeve (26) and the bush (25).

6. Directly driven reel device according to one of claims 1 to 5, characterised in that the outer circumference of the sleeve (26) and/or the inner circumference of the bushes (24, 25) is coated with ceramic.

7. Directly driven reel device according to one of claims 1 to 6, characterised in that the bushes (24, 25) are flexibly mounted in the housing (23).

## Revendications

1. Bobineuse à entraînement direct (1) pour embobiner et/ou débobiner une bande de laminoir, comprenant un tambour (2) constitué de plusieurs éléments susceptibles d'être déplacés en écartement, qui s'appuient par des surfaces de coulissement réalisées en forme de coin contre un arbre de bobineuse (4) monté en rotation dans un carter de bobineuse, comprenant un poussoir (12) guidé dans l'arbre de bobineuse (4) et relié aux segments de tambour (11) au moyen d'une bride de raccordement (13) ; un cylindre (17) qui s'étend axialement étant ménagé dans l'arbre de bobineuse (4) et comprenant un piston (16), relié au poussoir (12) et capable de provoquer un déplacement axial relatif entre l'arbre de bobineuse (4) et le poussoir (12) relié aux segments (11) et au moyen desquels est entraîné un déplacement d'écartement des segments (11), l'arbre de bobineuse (4) se prolongeant au-delà du cylindre (17) à travers un talon d'arbre (5) bridé et refermant le cylindre, en direction du moteur d'entraînement direct (7) agencé de manière axiale, et en ce qu'il est prévu un raccord d'admission rotatif (8) via lequel un fluide sous pression peut être admis vers l'unité à piston-et-cylindre (14) prévue dans l'arbre de bobineuse (4),
caractérisée en ce que le raccord d'admission rotatif (8) comprend un boîtier (23) qui entoure l'arbre de bobineuse (4) monté flottant et/ou le talon d'arbre (5), dans lequel sont prévus au moins un raccord (27, 28) à titre d'admission et d'évacuation, et dans lequel est monté un manchon (24, 25) pour chaque admission et chaque évacuation, l'enveloppe intérieure et l'enveloppe extérieure dudit manchon étant respectivement pourvues de canaux annulaires (29, 31) qui sont reliés les uns aux autres via au moins un perçage (30) sensiblement radial, les canaux annulaires extérieurs (29) engageant par le dessous les raccords d'admission et d'évacuation (27, 28) du boîtier (23), et les canaux annulaires intérieurs (31) étant engagés par le dessous par des perçages d'évacuation (32) associés à l'arbre de bobineuse (4) et/ou au talon d'arbre (5).

2. Bobineuse à entraînement direct selon la revendication 1,
caractérisée en ce que les perçages d'évacuation (32) sont ménagés dans une douille (26) qui entoure l'arbre de bobineuse (4) et/ou le talon d'arbre (5), ladite douille comportant des conduites à fluide sous pression (15, 15') vers l'unité à piston-et-cylindre (14).

3. Bobineuse à entraînement direct selon l'une ou l'autre des revendications 1 et 2, caractérisée en ce que l'unité à piston-et-cylindre (14) et les raccords d'admission rotatifs (8) comportent des chambres de collecte pour les fuites d'huile, lesquelles peuvent être ramenées à un réservoir d'huile via des conduites à huile (22).

4. Bobineuse à entraînement direct selon l'une des revendications 1 à 3,
caractérisée en ce que pendant le fonctionnement de la bobineuse, il est maintenu au moins un seuil de pression prédéterminé dans les conduites à fluide sous pression (15, 15').

5. Bobineuse à entraînement direct selon l'une ou l'autre des revendications 1 et 2, caractérisée en ce que le manchon (25) au moins comporte des canaux annulaires additionnels (34, 35 ; 34', 35') et des perçages radiaux (36 ; 36') qui les relient, susceptibles d'être alimentés avec un fluide sous pression qui réalise la lubrification entre la douille (26) et le manchon (25).

6. Bobineuse à entraînement direct selon l'une des revendications 1 à 5,
caractérisée en ce que l'enveloppe extérieure de la douille (26) et/ou les enveloppes intérieures des manchons (24, 25) sont revêtues de céramique.

7. Bobineuse à entraînement direct selon l'une des revendications 1 à 6,
caractérisée en ce que les manchons (24, 25) sont montés de manière flexible dans le boîtier (23).
